Europäisches Patentamt

(19) European Patent Office

Office européen des brevets

(11) Numéro de publication : **0 162 746**
**B1**

(12) FASCICULE DE BREVET EUROPÉEN

(45) Date de publication du fascicule du brevet :
23.12.87

(21) Numéro de dépôt : 85400768.9

(22) Date de dépôt : 17.04.85

(51) Int. Cl.⁴ : **F 25 B 29/00**, F 25 B 15/00,
C 09 K 5/04

(54) Nouveau procédé de production de froid et/ou de chaleur à absorption utilisant un mélange de plusieurs constituants comme fluide de travail.

(30) Priorité : 25.04.84 FR 8406627

(43) Date de publication de la demande :
27.11.85 Bulletin 85/48

(45) Mention de la délivrance du brevet :
23.12.87 Bulletin 87/52

(84) Etats contractants désignés :
**BE DE GB IT NL SE**

(56) Documents cités :
EP-A- 0 039 545
FR-A- 716 988
FR-A- 741 856
FR-A- 2 307 236
FR-A- 2 398 101
FR-A- 2 455 253
GB-A- 2 047 865
US-A- 2 182 098
US-A- 2 182 453
US-A- 3 312 077
US-A- 3 312 078
US-A- 3 638 452
US-A- 3 854 301

(73) Titulaire : **INSTITUT FRANCAIS DU PETROLE**
**4, Avenue de Bois-Préau**
**F-92502 Rueil-Malmaison (FR)**

(72) Inventeur : **Larue, Joseph**
**97, Grande Rue**
**F-78240 Chambourcy (FR)**
Inventeur : **Rojey, Alexandre**
**29-33, rue Henri Régnault**
**F-92380 Garches (FR)**

## Description

La présente invention concerne un nouveau procédé de production de froid et/ou de chaleur à absorption, pouvant trouver des applications dans de nombreux domaines, notamment dans le traitement de gaz sur champ ou le chauffage domestique ou collectif.

Dans le cas des procédés de production de froid et/ou de chaleur fonctionnant avec des cycles à compression, le fluide de travail est comprimé en phase vapeur, condensé en cédant de la chaleur de condensation à un fluide extérieur de refroidissement (eau ou air), détendu et vaporisé en produisant du froid. Il est possible d'éviter l'utilisation d'un compresseur et d'une machine d'entraînement (moteur ou turbine) en ayant recours à un cycle à absorption. Les machines fonctionnant selon un cycle à absorption utilisent un fluide de travail et un solvant.

On a déjà proposé (FR-A-716988 et FR-A-2398101) de faire fonctionner des machines thermiques à absorption en utilisant un fluide de travail composé d'au moins deux composés chimiques distincts.

Selon une autre proposition connue (US-A-3638452), mettant en œuvre un fluide de travail conventionnel, la solution riche provenant de l'absorbeur est mise successivement en contact avec le fluide de travail, entre le générateur et le condenseur, puis avec le fluide de travail en cours d'absorption dans le solvant et enfin avec la phase solvant pauvre provenant du générateur.

Enfin, selon US-A-2182453 on a proposé de faire fonctionner une machine thermique à absorption en plusieurs étapes distinctes en utilisant la chaleur de condensation d'une phase vapeur circulant dans un premier étage pour échauffer une solution circulant dans un autre étage et provoquer ainsi l'évaporation du fluide de travail de cet autre étage.

Le procédé de l'invention est défini comme suit :

Procédé de production de froid et/ou de chaleur à absorption utilisant un solvant et un fluide de travail constitué d'un mélange d'au moins deux constituants, ledit solvant ayant une température d'ébullition à pression atmosphérique supérieure d'au moins 100 °C à la température de bulle dudit fluide de travail à pression atmosphérique, dans lequel on désorbe au moins partiellement une solution (M) dudit mélange d'au moins deux constituants dans ledit solvant et on condense au moins partiellement le mélange désorbé résultant d'au moins deux constituants, ladite désorption et ladite condensation étant effectuées à une pression relativement haute, on détient (étape c) au moins une partie du mélange condensé résultant et on la vaporise à une pression relativement basse en cédant du froid à un milieu extérieur, on contacte le mélange vaporisé résultant avec une phase solvant (S) et on l'absorbe dans cette phase solvant (étape d) à une pression voisine de celle de l'étape (c) en fournissant de la chaleur à un fluide extérieur, la phase solvant (S) étant constituée par la phase liquide provenant de la désorption, de manière à reconstituer la solution (M), et on renvoie la solution (M) à la désorption, caractérisé en ce que l'on divise la solution (M) en au moins une première fraction $(M_1)$ et une seconde fraction $(M_2)$, en ce que l'on condense le mélange désorbé en au moins deux étapes successives effectuées avec échange de chaleur respectivement d'abord (étape a) avec ladite première fraction $(M_1)$ de la solution (M) puis (étape b) avec un fluide extérieur, de manière à produire un mélange condensé (F), en ce que ladite première fraction $(M_1)$, après ledit échange de chaleur de l'étape (a), est envoyée à la désorption, et en ce que ladite seconde fraction $(M_2)$ de la solution (M) est d'abord mise en relation d'échange de chaleur avec la phase solvant (S) envoyée de la désorption à l'absorption puis est envoyée à la désorption.

Le choix de la composition du fluide de travail dépend des applications envisagées. Dans le cas du chauffage d'eau, le fluide de travail peut être constitué d'un mélange de plusieurs hydrocarbures halogénés, ce qui permet d'éviter les problèmes de sécurité liés à l'utilisation de l'ammoniac ; dans le cas de la réfrigération d'un gaz naturel, le fluide de travail peut être constitué d'un mélange de plusieurs hydrocarbures, choisis de préférence parmi ceux qui sont présents dans le gaz traité de façon à éviter les stockages de réserves de fluide de travail, et à simplifier les appoints à effectuer. De plus, la mise en œuvre d'un fluide de travail constitué par un mélange de plusieurs constituants implique une configuration de cycle spécifique qui conduit à un procédé plus efficace et plus performant que les procédés classiques à absorption utilisant un corps pur comme fluide de travail.

Le fluide de travail utilisé dans le procédé selon l'invention comprend au moins deux constituants, chacun des constituants ayant une température d'ébullition normale de préférence inférieure a 70° C. Ces constituants peuvent être choisis, par exemple, parmi les hydrocarbures, dont le nombre d'atomes de carbone est inférieur ou égal à six, tels que, par exemple, le méthane, l'éthane, le propane, le n-butane, l'isobutane, le n-pentane, l'isopentane, le néopentane, l'éthylène, le propylène, le butène-1, le butène-2, le n-hexane, l'isohexane, le 2,2-diméthylbutane, le 2,3-diméthylbutane, le 3-méthylpentane. Les constituants du fluide de travail peuvent être également choisis parmi les hydrocarbures halogénés tels que par exemple, le tétrafluorométhane, le monochlorotrifluorométhane, le trifluorométhane, le trifluoromonobromométhane, le monochloropentafluoroéthane, le monochlorodifluorométhane, le dichlorodifluorométhane, le chlorodifluorobromométhane, le trichlorofluorométhane, le dichlorofluorométhane, le tétrachlorodifluoroéthane, le trichlorotrifluoroéthane, le dichlorotétrafluoroéthane, le chlorodifluoroéthane, le monochloromonofluorométhane, le difluorométhane, le monofluorométhane, le pentachloromonofluoroéthane, l'hexafluoroéthane, le dichlorotrifluoroéthane, le chlorotétrafluoroéthane, le pentafluoroéthane, le chlorotrifluoroéthane, le chlorodifluoroéthane, le trifluoroéthane, le difluoroéthane, l'octafluoropropane ou le pentafluoropropane.

Le solvant est choisi de manière à être miscible avec le mélange formant le fluide de travail ; il est caractérisé par un point d'ébullition normale supérieur d'au moins 100 °C à la température de bulle du fluide de travail à pression atmosphérique. Ce solvant peut être un corps pur ou un mélange ; ce peut être un hydrocarbure ou un mélange d'hydrocarbures ; dans ce cas, le nombre d'atomes de carbone des molécules de solvant sera de préférence au moins égal à 6 ; les hydrocarbures utilisés peuvent être paraffiniques, aromatiques ou naphténiques, et peuvent être choisis, par exemple, parmi les huiles hydrocarbonées. Un ou plusieurs atomes d'hydrogène peuvent être substitués par d'autres atomes tels que Cl, F, Br, et le solvant peut également comprendre des fonctions alcool, aldéhyde, cétone, ester, éther, acide, ayant les formules $CH_3OH$, $R—CH_2OH$, $R—CHOH—R'$, $RR'R''C—OH$, $R—CHO$, $RR'C=O$, $R—COO—R'$, $R—O—R'$, $R—COOH$, dans lesquelles R, R' et R'' désignent des radicaux hydrocarbonés qui peuvent eux-mêmes être partiellement substitués.

Le système comporte donc l'utilisation d'au moins 3 constituants, deux de ces trois constituants formant le fluide de travail et le troisième formant le solvant.

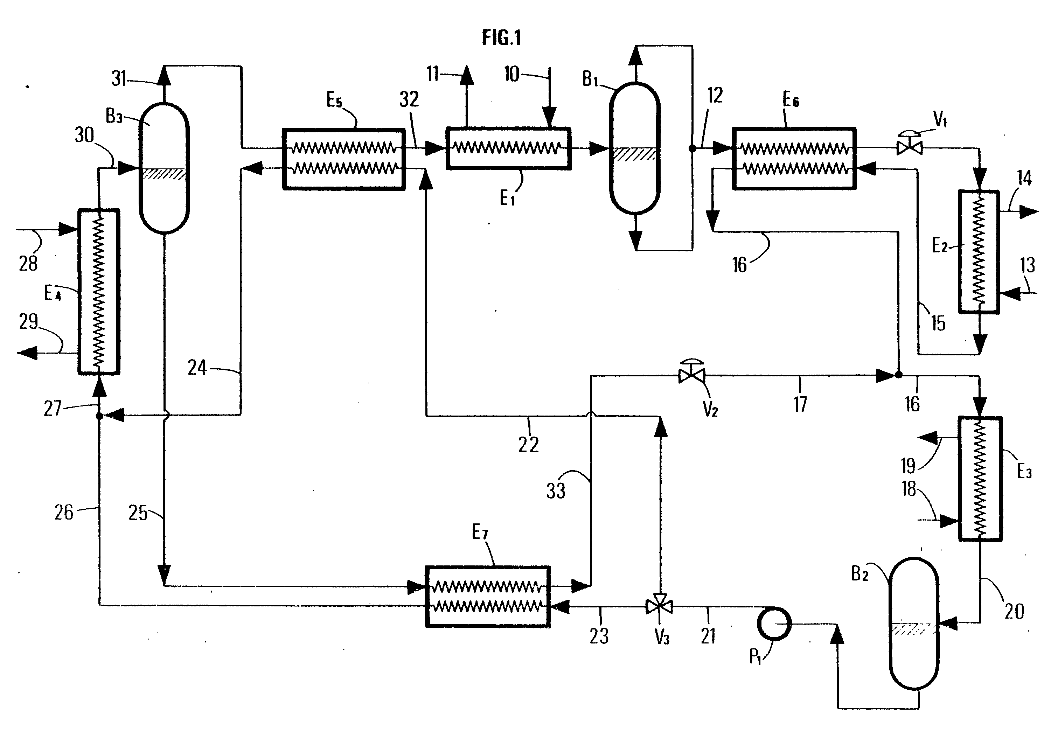

Un exemple de mise en œuvre d'une première version du procédé selon l'invention est illustré par le schéma de la Figure 1 : le fluide de travail (F) gazeux provenant du bac B3 et circulant dans la conduite 31 entre dans l'échangeur E5 dans lequel il se condense partiellement en se refroidissant par échange thermique, ressort par la conduite 32, entre dans l'échangeur E1 dans lequel il se condense au moins partiellement en se refroidissant par échange thermique avec un fluide extérieur qui arrive par la conduite 10 et repart par la conduite 11 ; le fluide de travail (F) au moins partiellement condensé est recueilli dans le bac de réserve B1 ; il en ressort par le conduit 12, entre dans l'échangeur E6 dans lequel il est soit sous-refroidi s'il était entièrement condensé à la sortie de E1 soit condensé totalement et éventuellement sous-refroidi s'il n'était pas totalement condensé à la sortie de E1, et est détendu à travers la vanne V1 : il est alors vaporisé au moins partiellement dans l'échangeur E2 en fournissant du froid à un fluide extérieur qui arrive dans E2 par la conduite 13 et repart par la conduite 14 ; le fluide de travail ressort de E2 par la conduite 15, se réchauffe dans l'échangeur E6 par échange thermique avec le fluide de travail à haute pression qui arrive par la conduite 12, et ressort par la conduite 16 ; il est alors contacté avec la phase solvant liquide (S) qui arrive par la conduite 17, la phase vapeur est absorbée dans la phase solvant liquide dans l'échangeur E3 en cédant de la chaleur à un fluide extérieur qui arrive par le conduit 18 et repart par le conduit 19. La solution obtenue (M) ressort de l'échangeur E3 par le conduit 20, et est recueillie dans le bac de réserve B2, d'où elle est reprise par la pompe de circulation P1, et envoyée dans le conduit 21 : le débit liquide arrivant par le conduit 21 dans la vanne trois voies V3 est reparti en deux fractions : la fraction la plus importante (M1) est envoyée par le conduit 23 dans l'échangeur E7 d'où elle ressort par le conduit 26 ; la fraction restante (M2) est envoyée par le conduit 22 dans l'échangeur E5 dans lequel elle se réchauffe par échange thermique avec le fluide de travail entrant par le conduit 31 ; elle ressort par le conduit 24, et les deux fractions (M1) et (M2) sont mélangées et entrent par le conduit 27 dans l'échangeur E4 dans lequel elles se réchauffent par échange thermique avec un fluide chaud extérieur qui entre par le conduit 28 et ressort par le conduit 29 : la solution ressort de l'échangeur E4 par la conduite 30, partiellement vaporisée : les deux phases liquide et vapeur sont séparées dans le bac B3 ; la phase liquide, formant la phase solvant (S), sort de B3 par le conduit 25, entre dans l'échangeur E7 dans lequel elle se refroidit par échange thermique avec la fraction (M1) de la solution (M) entrant par la conduite 23, ressort de E7 par le conduit 33, traverse la vanne V2 en subissant une baisse de pression, et arrive par la conduite 17 pour être mise en contact avec le fluide de travail (F) circulant dans le conduit 16 ; la phase gazeuse, formant le fluide de travail (F), sort du bac B3 par la conduite 31 et entre dans l'échangeur E5 pour effectuer un nouveau cycle.

Dans les machines à absorption classiques utilisant un corps pur comme fluide de travail, l'échangeur E7 existe toujours.

Dans certains cas (US-A-3638452) un échangeur analogue à l'échangeur E5 de l'invention a été prévu, mais l'intérêt de cet échangeur est faible car la condensation du fluide de travail se fait à température sensiblement constante et assez basse. On ne récupère donc pratiquement que de la chaleur sensible ; l'auteur du brevet américain est donc obligé d'envoyer ensuite la solution (M) à un échangeur analogue à l'échangeur E7 de l'invention. Dans le cas du procédé selon l'invention, la condensation du fluide de travail s'effectue sur un intervalle (par exemple un intervalle de 30 à 150 °C), ce qui permet de récupérer une quantité de chaleur importante (et à un niveau thermique élevé) sur la condensation du fluide de travail pour réchauffer la solution (M), et augmenter ainsi le rendement du procédé.

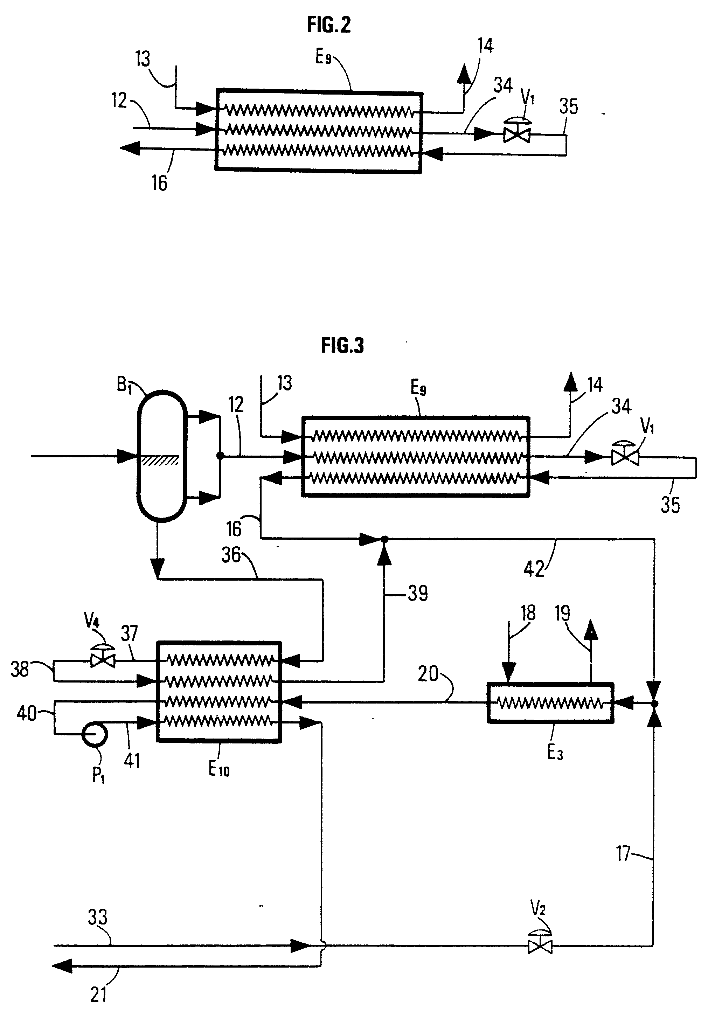

Une variante du procédé consiste à regrouper les échangeurs E6 et E2 en un seul échangeur E9 à trois flux : cette variante est illustrée par la Figure 2. A la sortie de l'échangeur E1, le fluide de travail (F) au moins partiellement condensé entre par le conduit 12 dans l'échangeur E9, et en ressort par le conduit 34 entièrement liquide et éventuellement sous-refroidi ; il est détendu dans la vanne V1, entre à nouveau par le conduit 35 dans E9 dans lequel il se vaporise au moins partiellement en produisant du froid qui sert d'une part à refroidir le fluide de travail circulant dans les conduits 12 et 34, et d'autre part à refroidir un fluide extérieur qui entre dans E9 par le conduit 13 et en ressort par le conduit 14. Cette variante permet de produire du froid sur un intervalle de température plus grand que dans le cas d'utilisation des deux échangeurs E2 et E6, et permet de rendre le procédé plus compact.

Une version améliorée du procédé selon l'invention permet d'augmenter l'intervalle de température entre le générateur et l'évaporateur, et d'élargir, de cette façon, le champ d'application du procédé en particulier pour produire du froid à basse température.

Dans cette version améliorée du procédé selon l'invention le mélange de constituants formant le fluide de travail (F) est condensé à une pression relativement haute en au moins trois étapes par échange thermique, d'abord (étape a) avec une partie au moins de la solution (M) provenant de l'étape (g), puis (étape b) avec un fluide extérieur, une partie (F2) du fluide de travail (F) formée d'une partie au moins de la fraction liquide issue de l'étape (b) étant prélevée et envoyée à l'étape (f), la partie (F1) restante du fluide de travail étant totalement condensée et éventuellement sous-refroidie au cours d'une étape (e) par échange thermique avec le fluide de l'étape (c) en cours de vaporisation, la fraction (F1) du fluide de travail (F) étant ensuite détendue et vaporisée à une pression relativement basse au cours d'une étape (c) en cédant du froid à un fluide extérieur et à la fraction (FI) du fluide de travail de l'étape (e), la partie (F2) du fluide de travail étant détendue et vaporisée au moins partiellement au cours d'une étape (f) à une pression voisine de celle de l'étape (c) en produisant le froid nécessaire à l'étape (g), les deux fractions (F1) et (F2) résultantes étant alors réunies et contactées avec la phase solvant (S) et absorbées partiellement dans cette phase solvant à une pression voisine de celle de l'étape (c) en fournissant de la chaleur à un fluide extérieur au cours de l'étape (d), le mélange gaz-liquide issu de l'étape (d) recevant au cours de l'étape (g) le froid produit à l'étape (f) de façon à poursuivre l'absorption du fluide de travail (F) dans le solvant, la solution (M) résultant de l'étape (g) étant traitée comme décrit plus haut, en produisant une phase vapeur qui constitue le fluide de travail (F) et qui est envoyé à l'étape (a) et une phase liquide qui constitue la phase solvant (S) et qui est envoyée à l'étape (d), une partie au moins de la chaleur nécessaire audit chauffage de la solution (M) étant fournie par l'échange thermique avec le fluide de travail (F) à l'étape (a).

Un exemple de mise en œuvre de cette version améliorée du procédé selon l'invention est illustré par le schéma de la Figure 3 : une fraction (F1) du fluide de travail, constituée de la phase vapeur et éventuellement d'une partie de la phase liquide, sort du bac B1 par la conduite 12, entre dans l'échangeur E9 dans lequel elle est totalement condensée et éventuellement sous-refroidie, ressort par la conduite 34, est détendue dans la vanne V1 à une pression relativement basse, entre par le conduit 35 dans l'échangeur E9 dans lequel elle se vaporise au moins partiellement en fournissant du froid d'une part à la fraction (F1) du fluide de travail circulant dans les conduites 12 et 34 et d'autre part à un fluide extérieur qui entre dans E9 par la conduite 13 et en ressort par la conduite 14, ressort de l'échangeur E9 par la conduite 16. La fraction restante (F2) du fluide de travail du bac B1, constituée de tout ou partie de la phase liquide, sort par le conduit 36, entre dans l'échangeur E10 dans lequel elle se sous-refroidit, ressort par la conduite 37, est détendue dans la vanne V4, rentre par le conduit 38 dans l'échangeur E10 dans lequel elle se vaporise au moins partiellement en produisant du froid, ressort par la conduite 39 et est mélangée à la fraction (F1) du fluide de travail circulant dans la conduite 16. Le mélange des fractions (F1) et (F2) circulant dans la conduite 42 est contacté avec la phase solvant liquide (S) qui arrive par le conduit 17 : dans l'échangeur E3, une partie de la phase vapeur est absorbée dans le solvant en cédant de la chaleur à un fluide extérieur qui arrive par le conduit 18 et repart par le conduit 19 ; le mélange partiellement liquide et vapeur sort de E3 par le conduit 20 et entre dans l'échangeur E10, dans lequel la totalité de la phase vapeur s'absorbe dans le solvant, par refroidissement par échange thermique avec la fraction (F2) du fluide de travail qui produit du froid en se vaporisant dans la branche de l'échangeur E10 comprise entre les conduites 38 et 39. La solution (M) obtenue sort de E10 par le conduit 40, est reprise par la pompe P1 qui en élève la pression, entre par le conduit 41 dans l'échangeur E10 dans lequel elle se réchauffe et ressort par le conduit 21.

Dans cette version améliorée du procédé selon l'invention, la condensation et l'absorption du fluide de travail se terminent à une température inférieure à la température ambiante, ce qui permet d'utiliser des constituants plus légers que dans la première version du procédé et donc d'abaisser la température de l'évaporateur pour une même température de générateur.

La version améliorée du procédé selon l'invention peut faire l'objet de plusieurs variantes qui permettent d'abaisser la température de l'évaporateur. En particulier, la condensation et l'absorption dans le solvant du fluide de travail peuvent être réalisées en un plus grand nombre d'étapes et/ou à plusieurs niveaux de pression.

L'obtention de très basses températures à l'évaporateur peut également être réalisée par la mise en cascade de plusieurs cycles à absorption (cette technique est couramment employée pour des cycles frigorifiques à compression). Dans ce cas, la condensation et l'absorption dans le solvant du fluide de travail du cycle dont l'évaporateur est à la température la plus basse, désigné cycle (α), est réalisée au moins en partie en utilisant le froid produit à l'évaporateur d'un autre cycle à absorption, désigné cycle (β), dont le fluide

de travail est condensé et absorbé dans un solvant à une température supérieure ou égale à l'ambiante. Dans un agencement préféré du procédé à cascade, la chaleur rejetée par le cycle (β) par la condensation et l'absorption dans le solvant du fluide de travail peut être utilisée au moins partiellement pour fournir la chaleur nécessaire à l'échangeur E4 du cycle (α). Le nombre de cycles en cascade sera d'autant plus grand que la température de réfrigération requise sera plus basse.

Dans les différentes versions du procédé selon l'invention, certains échangeurs sont à flux multiples : 3 pour E9. De tels échangeurs sont d'un emploi courant en réfrigération et en cryogénie, en particulier dans les techniques de liquéfaction du gaz naturel. Ils peuvent être à plaques (en aluminium brasé ou en acier inoxydable) ou du type bobiné. L'utilisation d'échangeurs à plaques en aluminium brasé est particulièrement intéressante en raison de la grande compacité des appareils et de leur coût moins élevé que celui des échangeurs du type bobiné. Les autres appareils utilisés dans les différentes versions du procédé tels que les ballons, pompes, vannes et les autres échangeurs sont de conception classique.

Le niveau de température résultant de la vaporisation du fluide de travail dépend de la nature des constituants utilisés et de la pression de vaporisation ; pour éviter les entrées d'air qui pourraient poser des problèmes de sécurité, cette pression (basse pression du système) sera supérieure à la pression atmosphérique et de préférence comprise entre 0,1 et 1MPa. La valeur de la haute pression du procédé selon l'invention, c'est-à-dire la pression correspondant à l'étape de désorption du fluide de travail dans l'échangeur E4 et à sa condensation dans l'échangeur E1 est choisie en fonction de la température de fin de condensation du fluide de travail ; elle sera de préférence comprise entre 0,5 et 5 MPa.

Le niveau de froid produit par la vaporisation du fluide de travail dans l'évaporateur dépend de la composition de ce dernier et de l'agencement du cycle ; d'autre part, le froid est produit sur un intervalle de température, puisque le fluide de travail est un mélange de plusieurs constituants. Avec un schéma de procédé tel que celui de la Figure 1, le niveau de froid produit à l'évaporateur E2 peut être compris entre 30 °C et — 30 °C. Avec un schéma de procédé tel que celui de la Figure 3, le niveau de froid peut être compris entre — 30 et — 100 °C. En utilisant des agencements multiétagés, ou en cascade, le niveau de froid peut être de l'ordre de — 160 °C c'est-à-dire la température qui correspond à la liquéfaction du gaz naturel.

La chaleur à haut niveau qui est fournie à l'échangeur E4 pour réaliser la désorption du fluide de travail de la solution est à un niveau de température de préférence compris entre 100 et 300 °C.

Lorsque plusieurs cycles sont agencés en cascade, la chaleur fournie aux cycles dont les échangeurs E1 et E3 sont refroidis à une température inférieure à l'ambiante peut être à un niveau de température inférieur à 100 °C, en particulier si cette chaleur est fournie par la condensation du fluide de travail d'un autre cycle, ou par son absorption dans le solvant. Dans ce cas, le niveau de température de la fourniture de chaleur peut être aux environs de la température ambiante.

La chaleur fournie aux fluides extérieurs au cours d'une partie de la condensation du fluide de travail dans l'échangeur E1 et au cours de l'absorption du fluide de travail dans le solvant dans l'échangeur E3 est à un niveau de température intermédiaire entre celle du générateur et celle de l'évaporateur. Dans le cas d'un cycle unique, non inclus dans une cascade, la température du condenseur et de l'absorbeur est de préférence comprise entre 0 °C et 200 °C.

Le procédé selon l'invention est illustré par l'exemple suivant :

Exemple

Dans cet exemple, on procède selon le schéma représenté sur la Figure 1, dans lequel la modification schématisée sur la Figure 2 a été apportée, c'est-à-dire que les échangeurs E6 et E2 de la Figure 1 sont remplacés par un seul échangeur E9 à trois flux. Les fluides utilisés sont d'une part un kérosène comme solvant et un mélange éthane-propane-butane comme fluide de travail.

Le mélange solvant-fluide de travail sort de l'échangeur E3 par le conduit 20, totalement liquide à une température de 35 °C et sous une pression de 0,46 MPa. Cette solution est reprise par la pompe P1 qui élève sa pression jusqu'à 1,55 MPa. Le flux de solution est divisé en deux : la partie la plus importante, soit 92,5 % passe dans le conduit 23, se réchauffe dans l'échangeur E7 par échange thermique avec la phase solvant ; la partie restante passe dans le conduit 22, entre dans l'échangeur E5 dans lequel elle se réchauffe par échange thermique avec le fluide de travail. Les deux parties sont remélangées et la totalité de la solution entre dans l'échangeur E4 dans lequel elle se réchauffe par échange thermique avec un fluide externe chaud jusqu'à une température de 200 °C : la solution ressort de l'échangeur E4 par le conduit 30, partiellement vaporisée, les deux phases liquide et vapeur étant séparées dans le bac B3. La phase vapeur, constituant le fluide de travail, passe par le conduit 31, entre dans l'échangeur E5 dans lequel elle se refroidit, en se condensant partiellement, passe dans le condenseur E1 dans lequel elle se refroidit par échange thermique avec un fluide extérieur, ressort de E1 totalement condensée et à une température de 35 °C, entre dans l'échangeur E9 dans lequel elle est sous-refroidie jusqu'à une température de — 8,5 °C, est détendue dans la vanne V1, entre à une température de — 13,5 °C par le conduit 35, dans l'échangeur E9 dans lequel elle se vaporise en produisant du froid qui sert à refroidir un fluide extérieur et à sous-refroidir le fluide de travail, et ressort de l'échangeur E9 à 30 °C par le conduit 16. La phase liquide du bac B3, riche en solvant, passe dans le conduit 25, se refroidit dans l'échangeur E7, est détendue dans la vanne V2, et est mélangée avec le fluide de travail provenant du conduit 16. Le mélange entre dans l'échangeur E3, le fluide de travail s'absorbe dans le solvant en dégageant de la chaleur qui est évacuée par un fluide extérieur.

Dans cet exemple, le rapport du froid produit à l'évaporateur E9 à la chaleur fournie dans l'échangeur E4 est de 0,81. En utilisant dans le même cycle et avec les mêmes températures un couple kérosène-propane, ce rapport serait de 0,61.

## Revendications

1. Procédé de production de froid et/ou de chaleur à absorption utilisant un solvant et un fluide de travail constitué d'un mélange d'au moins deux constituants, ledit solvant ayant une température d'ébullition à pression atmosphérique supérieure d'au moins 100 °C à la température de bulle dudit fluide de travail à pression atmosphérique, dans lequel on désorbe au moins partiellement une solution (M) dudit mélange d'au moins deux constituants dans ledit solvant et on condense au moins partiellement le mélange désorbé résultant d'au moins deux constituants, ladite désorption et ladite condensation étant effectuées à une pression relativement haute, on détend (étape c) au moins une partie du mélange condensé résultant et on la vaporise à une pression relativement basse en cédant du froid à un milieu extérieur, on contacte le mélange vaporisé résultant avec une phase solvant (S) et on l'absorbe dans cette phase solvant (étape d) à une pression voisine de celle de l'étape (c) en fournissant de la chaleur à un fluide extérieur, la phase solvant (S) étant constituée par la phase liquide provenant de la désorption, de manière à reconstituer la solution (M), et on renvoie la solution (M) à la désorption, caractérisé en ce que l'on divise la solution (M) en au moins une première fraction ($M_1$) et une seconde fraction ($M_2$), en ce que l'on condense le mélange désorbé en au moins deux étapes successives effectuées avec échange de chaleur respectivement d'abord (étape a) avec ladite première fraction ($M_1$) de la solution (M) puis (étape b) avec un fluide extérieur, de manière à produire un mélange condensé (F), en ce que ladite première fraction ($M_1$), après ledit échange de chaleur de l'étape (a), est envoyée à la désorption, et en ce que ladite seconde fraction ($M_2$) de la solution (M) est d'abord mise en relation d'échange de chaleur avec la phase solvant (S) envoyée de la désorption à l'absorption puis est envoyée à la désorption.

2. Procédé selon la revendication 1 caractérisé en ce que l'absorption de l'étape (d) est partielle, en ce que le mélange condensé (F) provenant de l'étape (b) est divisé en deux fractions distinctes ($F_1$ et $F_2$), en ce que la fraction ($F_1$) est soumise à la détente et à la vaporisation de l'étape (c) et en ce que la fraction ($F_2$) est détendue et vaporisée à une pression relativement basse (étape f), en cédant du froid, la phase vapeur résultante ($F_2$) est réunie à la phase vapeur ($F_1$) résultant de l'étape (c), et le mélange résultant ($F_1 + F_2$) est soumis à l'étape (d), ledit froid cédé à l'étape (f) étant délivré à la solution (M) provenant de l'étape (d), pour achever ladite absorption, avant division de la solution (M) en lesdites première et seconde fraction ($M_1$ et $M_2$).

3. Procédé selon la revendication 2 caractérisé en ce que la fraction ($F_1$) du fluide de travail est constituée d'au moins la phase vapeur du fluide de travail (F) issu de l'étape (b), et en ce que la fraction restante ($F_2$) du fluide de travail est constituée d'une partie au moins de la phase liquide du fluide de travail (F) issu de l'étape (b).

4. Procédé selon l'une des revendications 1 à 3 dans lequel le fluide de travail (F) est constitué d'au moins deux constituants pris dans la liste suivante : méthane, éthane, propane, n-butane, isobutane, n-pentane, isopentane, néopentane, éthylène, propylène, butène-1, butène-2, n-hexane, isohexane, 2,2-diméthylbutane, 2,3-diméthylbutane, 3-méthylpentane, tétrafluorométhane, monochlorotrifluorométhane, trifluorométhane, trifluoromonobromométhane, monochloropentafluoroéthane, monochlorodifluorométhane, dichlorodifluorométhane, chlorodifluorométhane, tétrachlorodifluoroéthane, trichlorotrifluoroéthane, dichlorotétrafluoroéthane, chlorodifluoroéthane, monochloromonofluorométhane, difluorométhane, monofluorométhane, pentachloromonofluoroéthane, hexafluoroéthane, dichlorotrifluoroéthane, chlorotétrafluoroéthane, pentafluoroéthane, chlorotrifluoroéthane, chlorodifluoroéthane, trifluoroéthane, difluoroéthane, octafluoropropane, pentafluoropropane.

5. Procédé selon l'une des revendications 1 à 4 dans lequel le solvant (S) est un hydrocarbure paraffinique, aromatique ou naphténique dont le nombre d'atomes de carbone est au moins égal à 6, une huile hydrocarbonée, un hydrocarbure halogéné, un alcool de formule $CH_3OH$, $R—CH_2OH$, $R—CHOH—R'$ ou $RR'R''C—OH$, un aldéhyde de formule $R—CHO$, une cétone de formule $RR'C=O$, un ester de formule $R—COO—R'$, un éther de formule $R—O—R'$, un acide organique de formule $R—COOH$ ; $R$, $R'$, $R''$ désignant des radicaux hydrocarbonés qui peuvent être eux-mêmes partiellement substitués, le solvant (S) pouvant être constitué d'un mélange de ces produits.

6. Procédé selon l'une des revendications 1 à 5 caractérisé en ce que la pression de condensation du fluide de travail (F) est comprise entre 0,5 et 5 MPa, la pression de vaporisation du fluide de travail (F) est comprise entre 0,1 et 1 MPa, la pression d'absorption du fluide de travail (F) dans la phase solvant liquide (S) est comprise entre 0,1 et 1 MPa et la pression de chauffage de la solution (M) est comprise entre 0,5 et 5 MPa.

7. Procédé selon l'une des revendications 1 à 6 caractérisé en ce que la température maximale de chauffage de la solution (M) est comprise entre 100 et 300 °C.

8. Procédé selon l'une des revendications 1 à 7 caractérisé en ce que la température la plus basse de production de froid est comprise entre − 10 et − 160 °C.

9. Procédé selon l'une des revendications 1 à 8 caractérisé en ce que la vaporisation de l'étape (c) produit du froid dans une première branche d'un échangeur à trois flux, ledit froid étant cédé d'une part à un fluide externe circulant dans une seconde branche dudit échangeur et d'autre part audit mélange désorbé et au moins partiellement condensé d'au moins deux constituants, provenant de l'étape (b), circulant dans la troisième branche dudit échangeur, avant ladite détente dudit mélange.

10. Procédé selon l'une des revendications 1 à 9 dans lequel la chaleur fournie à un fluide extérieur au cours des étapes (b) et (d) est à un niveau de température compris entre 0 °C et 200 °C.

**Claims**

1. An adsorption process for producing cold and/or heat with the use of a solvent and of a working fluid consisting of a mixture of at least two constituents, said solvent having a boiling temperature, at atmospheric pressure, at least 100 °C higher than the bubble temperature of said working working fluid at atmospheric pressure, wherein a solution (M) of said mixture of at least two constituents in said solvent is at least partially desorbed and the resultant desorbed mixture of at least two constituents is at least partially condensed, said desorption and condensation being per formed at relatively high pressure, at least a portion of the resultant condensed mixture is expanded (step c) and vaporized at a relatively low pressure, thus transferring cold to an external medium, the resultant vaporized mixture is contacted with a solvent phase (S) and adsorbed therein (step d) at a pressure close to that of step (c), thus supplying heat to an external medium, the solvent phase (S) being formed of the liquid phase originating from the desorption step, so as to reconstitute solution (M), which is fed back to the desorption step, characterized in that solution (M) is divided into at least one first fraction ($M_1$) and one second fraction ($M_2$), in that the desorbed mixture is condensed in at least two successive steps performed by heat exchange, respectively with said first fraction ($M_1$) of solution (M) (step a) and then with an external fluid (step b), so as to produce a condensed mixture (F), in that said first fraction ($M_1$), after said heat exchange of step (a), is fed to the desorption step, and in that said second fraction ($M_2$) of solution (M) is first put into heat exchange relationship with the solvent phase (S) transferred from the desorption step to the absorption step, and then supplied to the desorption step.

2. A process according to claim 1, characterized in that the absorption of step (d) is partial, in that the condensed mixture (F) originating from step (b) is divided into two separate fractions ($F_1$ and $F_2$), in that fraction ($F_1$) is subjected to the expansion and vaporization of step (c) and in that fraction ($F_2$) is expanded and vaporized at a relatively low pressure (step f), thus transferring cold, the resultant vapor phase ($F_2$) joins with the vapor phase ($F_1$) resulting from step (c) and the resultant mixture ($F_1 + F_2$) is subjected to step (d), said cold transferred to step (f) being supplied to solution (M) originating from step (d) to complete said absorption, before division of solution (M) into said first and second fractions ($M_1$ and $M_2$).

3. A process according to claim 2, characterized in that fraction ($F_1$) of the working fluid is formed of at least the vapor phase of the working fluid (F) originating from step (b) and in that the remaining fraction ($F_2$) of the working fluid is formed of at least a part of the liquid phase of the working fluid (F) originating from step (b).

4. A process according to one of claims 1 to 3, wherein the working fluid (F) is formed of at least two constituents from the following list : methane, ethane, propane, n-butane, isobutane, n-pentane, isopentane, neopentane, ethylene, propylene, 1-butene, 2-butene, n-hexane, isohexane, 2,2-dimethylbutane, 2,3-dimethylbutane, 3-methylpentane, tetrafluoromethane, monochlorotrifluoromethane, trifluoromethane, trifluoromonobromomethane, monochloropentafluoroethane, monochlorodifluoromethane, dichlorodifluoromethane, chlorodifluoromethane, tetrachlorodifluoroethane, trichlorotrifluoroethane, dichlorotetrafluoroethane, chlorodifluoroethane, monochloromonofluoromethane, difluoromethane, monofluoromethane, pentachloromonofluoroethane, hexafluoroethane, dichlorotrifluoroethane, chlorotetrafluoroethane, pentafluoroethane, chlorotrifluoroethane, chlorodifluoroethane, trifluoroethane, difluoroethane, octafluoropropane, pentafluoropropane.

5. A process according to one of claims 1 to 4, wherein the solvent (S) is a paraffinic, aromatic or naphthenic hydrocarbon having at least 6 carbon atoms, a hydrocarbon oil, a halogenated hydrocarbon, an alcohol of formula $CH_3OH$, R—$CH_2$OH, R—CHOH—R' or RR'R"C—OH, an aldehyde of formula R—CHO, a ketone of formula RR'C=O, an ester of formula R—COO—R', an ether of formula R—O—R', an organic acid of formula R—COOH, R, R' and R" being hydrocarbon radicals which may be partially substituted, the solvent (S) being optionally formed of a mixture of said products.

6. A process according to one of claims 1 to 5, characterized in that the condensation pressure of the working fluid (F) ranges from 0.5 to 5 MPa, the vaporization pressure of the working fluid (F) ranges from 0.1 to 1 MPa, the pressure of absorption of the working fluid (F) into the liquid solvent phase (S) is from 0.1 to 1 MPa and the heating pressure of solution (M) from 0.5 to 5 MPa.

7. A process according to one of claims 1 to 6, characterized in that the maximum heating temperature of solution (M) is from 100 to 300 °C.

8. A process according to one of claims 1 to 7, characterized in that the lowest temperature of cold production ranges from — 10 to — 160 °C.

9. A process according to one of claims 1 to 8, characterized in that the vaporization of step (c) produces cold in a first pipe of a three-pipe exchanger, said cold being transferred both to an external fluid flowing through a second pipe of said exchanger and to said desorbed and at least partially condensed mixture of at least two constituents, originating from step (b), flowing through the third pipe of said exchanger, before expansion of said mixture.

10. A process according to one of claims 1 to 9, wherein the heat supplied to an external fluid during steps (b) and (d) is at a temperature level from 0 °C to 200 °C.

**Patentansprüche**

1. Absorptionsverfahren zur Kälte- und/oder Wärmeerzeugung unter Verwendung eines Lösungsmittels und eines Arbeitsmittels, bestehend aus einem Gemisch wenigstens zweier Bestandteile, wobei das Lösungsmittel eine Siedetemperatur bei atmosphärischem Druck hat, die um wenigstens 100 °C höher als die Blasentemperatur des Arbeitsmittels bei atmosphärischem Druck liegt, wobei man wenigstens teilweise eine Lösung (M) dieses Gemisches aus wenigstens zwei Bestandteilen in diesem Lösungsmittel desorbiert und wenigstens teilsweise das desorbierte resultierende Gemisch aus wenigstens zwei Bestandteilen kondensiert, wobei diese Desorption und diese Kondensation bei einem relativ hohen Druck vorgenommen wird, man (Stufe c) wenigstens einen Teil des kondensierten entstehenden Gemisches entspannt und bei einem relativ niedrigen Druck verdampft, indem man Kälte an ein äußeres Medium abgibt, das verdampfte entstehende Gemisch mit einer Lösungsmittelphase (S) kontaktiert und es in dieser Lösungsmittelphase (Stufe d) bei einem Druck benachbart dem der Stufe (c) absorbiert, indem man Wärme an ein äußeres Fluid liefert, wobei die Lösungsmittelphase (S) gebildet wird durch die flüssige aus der Desorption stammende Phase, derart, daß die Lösung (M) rekonstituiert wird und man die Lösung (M) zur Desorption zurückschickt, dadurch gekennzeichnet, daß man die Lösung (M) in wenigstens eine erste Fraktion $(M_1)$ und eine zweite Fraktion $(M_2)$ unterteilt, daß man das desorbierte Gemisch in wenigstens zwei aufeinanderfolgenden Stufen kondensiert, die mit Wärmeaustausch jeweils zunächst (Stufe a) mit dieser ersten Fraktion $(M_1)$ der Lösung (M), dann (Stufe b) mit einem äußeren Fluid derart durchgeführt werden, daß ein kondensiertes Gemisch (F) erzeugt wird, daß diese erste Fraktion $(M_1)$ nach diesem Wärmeaustausch der Stufe (a) zur Desorption geschickt wird und daß diese zweite Fraktion $(M_2)$ der Lösung (M) zunächst in Wärmeaustauschbeziehung mit der Lösungsmittelphase (S) gebracht wird, die von der Desorption zur Absorption geschickt wurde und dann zur Desorption geschickt wird.

2. Verfahren nach Anspruch 1, dadurch gekennzeichnet, daß die Absorptionsstufe (d) partiell ist, daß das kondensierte aus der Stufe (b) stammende Gemisch (F) in zwei unterschiedliche Fraktionen $(F_1$ und $F_2)$ unterteilt wird, daß die Fraktion $(F_1)$ der Entspannung und der Verdampfung der Stufe (c) ausgesetzt wird und daß die Fraktion $(F_2)$ entspannt und bei einem relativ niedrigen Druck (Stufe f) verdampft wird, indem Kälte abgegeben wird, wobei die resultierende Dampfphase $(F_2)$ mit der aus Stufe (c) stammenden Dampfphase $(F_1)$ wieder vereinigt wird und das resultierende Gemisch $(F_1$ und $F_2)$ der Stufe (d) ausgesetzt wird, wobei die in Stufe (f) abgegebene Kälte an die Lösung (M) aus der Stufe (d) geliefert wird, um diese Absorption zu beenden bevor die Lösung (M) in diese erste und diese zweite Fraktion $(M_1$ und $M_2)$ aufgeteilt wird.

3. Verfahren nach Anspruch 2, dadurch gekennzeichnet, daß die Fraktion $(F_1)$ des Arbeitsmittels aus wenigstens der Dampfphase des Arbeitsfluids (F) aus der Stufe (b) gebildet wird und daß die verbleibende Fraktion $(F_2)$ des Arbeitsfluids gebildet wird zum Teil wenigstens aus der flüssigen. Phase des Arbeitsmittels (F), das aus der Stufe (b) stammt.

4. Verfahren nach einem der Ansprüche 1 bis 3, bei dem das Arbeitsmittel (F) aus mindestens zwei Komponenten besteht, die aus folgender Gruppe ausgewählt sind : Methan, Ethan, Propan, n-Butan, Isobutan, n-Pentan, Isopentan, Neopentan, Ethylen, Propylen, Buten-1, Buten-2, n-Hexan, Isohexan, 2,2-Dimethylbutan, 2,3-Dimethylbutan, 3-Methylpentan, Tetrafluormethan, Monochlorotrifluormethan, Trifluormethan, Trifluoromonobrommethan, Monochloropentafluorethan, Monochlorodifluoromethan, Dichlorodifluoromethan, Chlordifluormethan, Tetrachlorodifluoroethan, Trichlorotrifluorethan, Dichlorotetrafluoroethan, Chlorodifluoroethan, Monochloromonofluoromethan, Difluoromethan, Monofluormethan, Pentachloromonofluorethan, Hexafluoroethan, Dichlorotrifluorethan, Chlorotetrafluoroethan, Pentafluoroethan, Chlorotrifluoroethan, Chlorodifluoroethan, Trifluoroethan, Difluoroethan, Octafluoropropan, Pentafluoropropan.

5. Verfahren nach einem der Ansprüche 1 bis 4, bei dem das Lösungsmittel (S) ein paraffinischer, aromatischer oder naphtenischer Kohlenwasserstoff, dessen Zahl an Kohlenstoffatomen mindestens 6 beträgt, ein Kohlenwasserstofföl, ein halogenierter Kohlenwasserstoff, ein Alkohol der Formel $CH_3OH$, $R—CH_2OH$, $R—CHOH—R'$ oder $RR'R''C—OH$, ein Aldehyd der Formel $R—CHO$, ein Keton der Formel $RR'C=O$, ein Ester der Formel $R—COO—R'$, ein Ether der Formel $R—O—R'$, oder eine organische Säure der Formel $R—COOH$ ist, wobei R, R', R'' Kohlenwasserstoffreste bedeuten, die selbst partiell substituiert sein können, und wobei das Lösungsmittel (S) aus einem Gemisch dieser Verbindungen bestehen kann.

6. Verfahren nach einem der Ansprüche 1 bis 5, dadurch gekennzeichnet, daß der Kondensationsdruck des Arbeitsfluids (F) zwischen 0,5 und 5 MPa beträgt, der Verdampfungsdruck des Arbeitsmittels (F) zwischen 0,1 und 1 MPa liegt, der Absorptionsdruck des Arbeitsfluids (F) in der flüssigen Lösungsmittelphase (S) zwischen 0,1 und 1 MPa und der Druck zur Aufheizung der Lösung (M) zwischen 0,5 und 5 MPa beträgt.

7. Verfahren nach einem der Ansprüche 1 bis 6, dadurch gekennzeichnet, daß die maximale Heiztemperatur der Lösung (M) zwischen 100 und 300 °C beträgt.

8. Verfahren nach einem der Ansprüche 1 bis 7, dadurch gekennzeichnet, daß die niedrigste Kälteerzeugungstemperatur zwischen — 10 °C und — 160 °C liegt.

9. Verfahren nach einem der Ansprüche 1 bis 8, dadurch gekennzeichnet, daß die Verdampfung der Stufe (c) Kälte in einem ersten Zweig eines Dreistromaustauschers erzeugt, wobei die Kälte einerseits an ein äußeres Fluid abgegeben wird, welches in einem zweiten Zweig des Wärmeaustauschers zirkuliert und andererseits an dieses desorbierte Gemisch, welches wenigstens teilweise aus zwei Bestandteilen, die aus der Stufe (b) stammen, kondensiert ist, wobei die Zirkulation in dem dritten Zweig dieses Wärmeaustauschers vor dieser Entspannung dieses Gemisches sattfindet.

10. Verfahren nach einem der Ansprüche 1 bis 9, dadurch gekennzeichnet, daß die an ein äußeres Fluid während der Stufen (b) und (d) gelieferte Wärme auf einem Temperaturniveau zwischen 0 °C und 200 °C sich befindet.

FIG.1

## FIG.2

## FIG.3